Europäisches Patentamt

European Patent Office

Office européen des brevets

(11) Publication number: **0 381 285**
**A2**

# EUROPEAN PATENT APPLICATION

(21) Application number: **90200201.3**

(22) Date of filing: **29.01.90**

(51) Int. Cl.5: **F16K 11/20**

(30) Priority: **02.02.89 IT 1929189**

(43) Date of publication of application:
**08.08.90 Bulletin 90/32**

(84) Designated Contracting States:
**AT BE CH DE ES FR GB GR IT LI LU NL SE**

(71) Applicant: **TEUCO GUZZINI S.r.l.**
**Via Passionisti, 40**
**I-62019 Recanati (Macerata)(IT)**

(72) Inventor: **Guzzini, Virgilio**
**Via Duomo, 13 D**
**I-62019 Recanati, Macerata(IT)**

(74) Representative: **Faraggiana, Vittorio, Dr. Ing.**
**Ingg. Guzzi e Ravizza S.r.l. Via Boccaccio, 24**
**I-20123 Milano(IT)**

(54) Device for mixing and dispensing water at constant temperature.

(57) Device for mixing hot and cold water from two
supply systems to obtain and dispense water on
command at a temperature established by the mix-
ing ratio, comprising a compensator to correct vari-
ations in the difference in pressure between the two
systems so that the mixing ratio remains constant
despite said variations. The mixing and dispensing
device being controlled, in terms of mixing ratio and
flow rate, by means of ratiomotors controlled by an
electronic circuit with pushbutton control. The mixer
being moreover thermostatically controlled for slight
temperature variations in the mixed water.

Fig.2

EP 0 381 285 A2

## DEVICE FOR MIXING AND DISPENSING WATER AT COSTANT TEMPERATURE

One problem in the field of mixer taps for sanitary fittings such as wash-basins, bath tubs, showers, etc., consists of maintaining the desired temperature of the water flowing from the mixer tap. In fact, the measurement of said temperature and control of parameters such as the mixing ratio on the basis of the latter (as occurs in thermostat-controlled mixers of known technique), gives unsatisfactory results with regard to rapid variations which, moreover, are those which the user finds the most irritating.

The scope of this invention is to obviate the above-mentioned problem by providing a device for mixing and dispensing water at a constant temperature under the most widely varied conditions. This scope is achieved by providing a device for mixing hot and cold water from two supply systems, and dispensing water on command at a temperature established by the mixing ratio, characterized by the fact of comprising in combination: a mixing element connected to a first electric ratiomotor for varying the mixing ratio of the latter; a regulating element for controlling the flow of water from said mixer, operatively connected to a second electric ratiomotor; a compensator for correcting the difference in pressure in the two systems connected between said systems and said mixing element, said compensator acting, in proportion to such difference, on flow apertures between said systems and said mixer in order to reduce the area of flow from the system with a higher pressure and increase the area of flow from the system with a lower pressure.

The innovatory principles of this invention and its advantages with respect to the known technique will be more clearly evident from the following description of a possible exemplificative embodiment applying such principles, with reference to the accompanying drawings, in which:

    - figure 1 shows a schematic bottom plan view of a water regulating and mixing unit made according to the innovatory principles of this invention;

    -figure 2 shows a schematic cross-sectional view along the line II-II of figure 1;

    -figure 3 shows a schematic partial cross-sectional view along the line III-III of figure 1;

    -figure 4 shows a block diagram of a complete regulating device using the unit of figure 1.

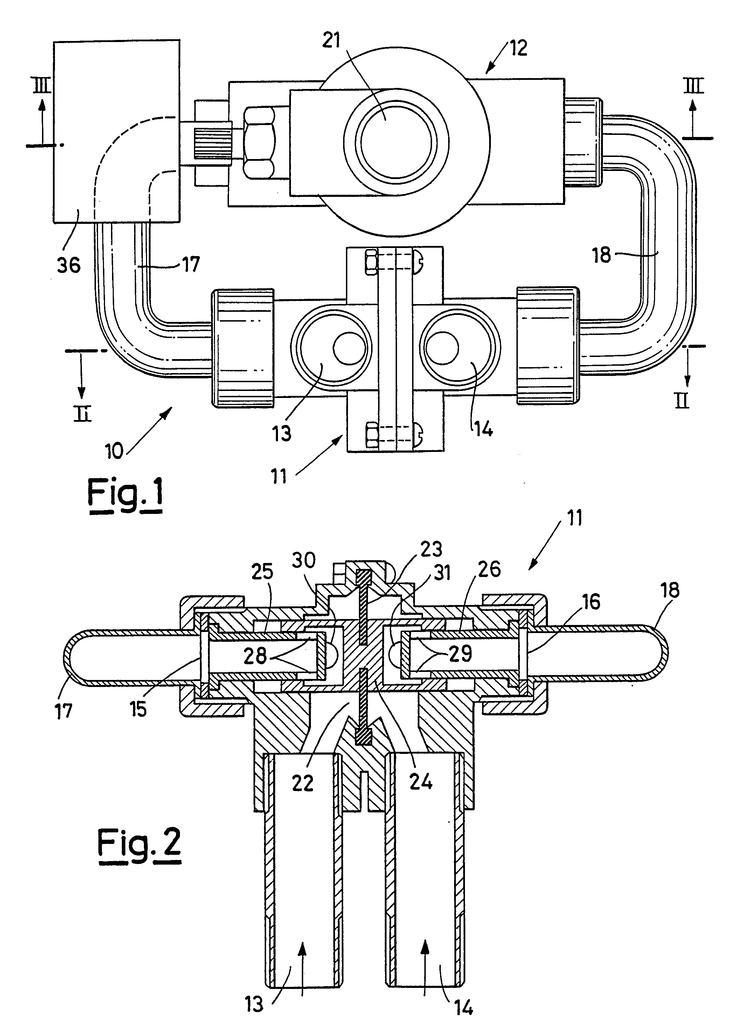

With reference to the figures, as can be seen in figure 1, an electromechanical regulating unit, generically indicated by reference 10, comprises a pressure compensating element 11 having inlets 13 and 14 connected, respectively, to a hot water supply system and to a cold water supply system,
neither of which is shown since they can be of any known type. The compensator 11 has outlets 15 and 16 connected, by means of pipes 17 and 18, to the respective inlets 19 and 20 of a regulating element 12 with an outlet 21.

As can be seen in figure 2, inside the compensator the inlets 13 and 14 communicate with a chamber 22 divided into two halves by a flexible diaphragm 23 which keeps the two flows separate and which axially supports a plug member 24 symmetrical with respect to the surface of the latter and sliding tightly on two outlet elements 25 and 26 so as to achieve, with the holes 28 and 29, variable sectional areas of flow. The communication between each half-chamber and its respective flow aperture is made possible by holes 30 and 31 in the plug member.

The inlet 13 thus communicates with its corresponding outlet 15 through, in sequence, a half-chamber of the chamber 22, the hole 30, the free apertures of the holes 28 and the element 25.

Likewise, the inlet 14 communicates with its corresponding outlet 16 through in sequence the other half-chamber, the hole 31, the free apertures of the holes 29 and the element 26.

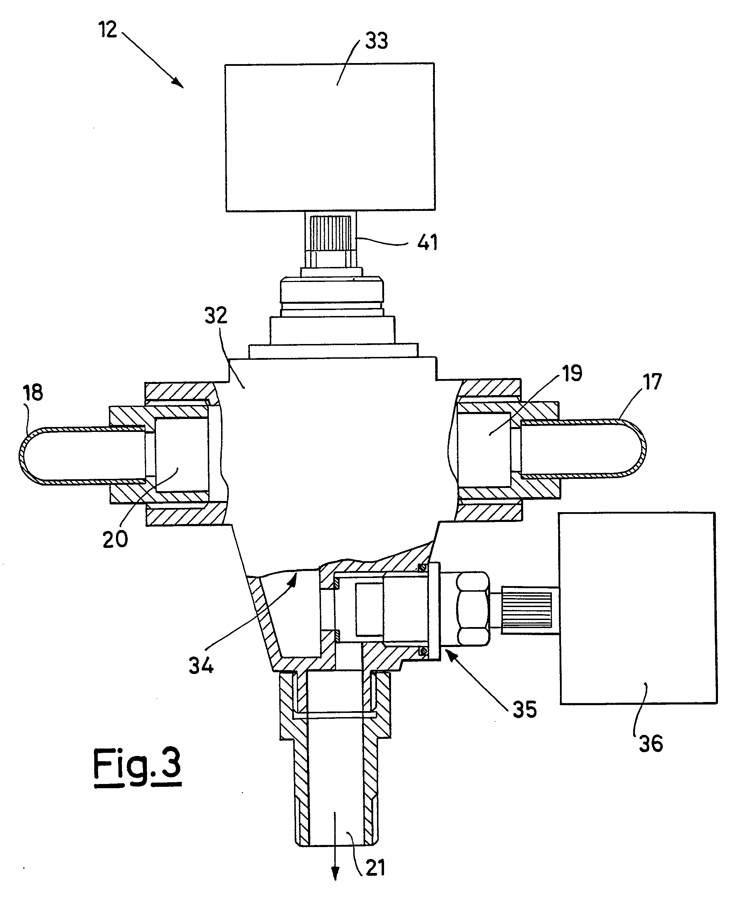

As can be seen in figure 3, the regulating element 12 comprises a thermostatic mixer 32 (for example, of the type with a thermostatic cartridge), of known type, for mixing water coming from the inlets 19 and 20, with a mixing ratio determined by the angular position of a control pin 41 set by a ratiomotor 33. The aforesaid mixer will not be further described since it is easily imaginable by anyone expert in the field.

A flow control device 35 operated by means of a second electric ratiomotor 36 is disposed between the outlet 34 of the mixer and the outlet duct 21 of the regulating unit.

The device 35 can be of any known type easily imaginable by the technician; for example, it can be of the screw type with ceramic disks.

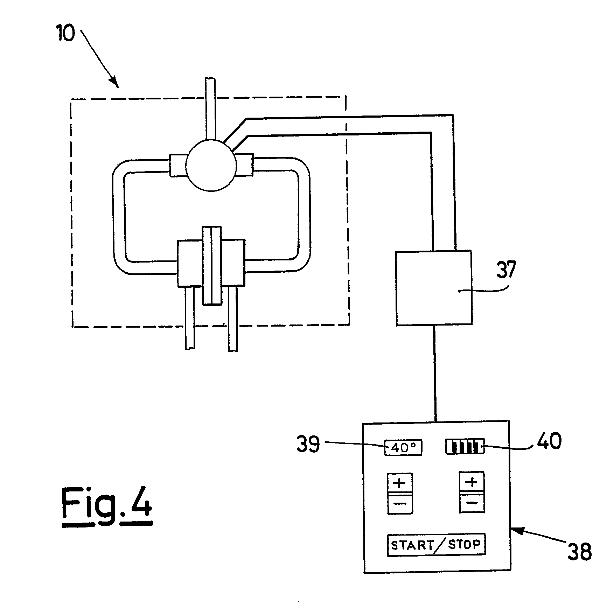

As shown in figure 4, the ratiomotors 33 and 36 are operatively connected to a monitoring device 37 controlled by means of a control panel 38. The monitoring device can be made using known means, for example, a microprocessor, as is easiy imaginable by the technician, especially in the light of the following operating description.

As can be seen in figure 4, the control panel has a first pair of pushbuttons marked " + " and "-" for controlling the rotation of the motor 33 and a second pair of pushbuttons marked " + " and "-" for controlling the rotation of the motor 36. It is also provided with a "start/stop" pushbutton for activating and deactivating the entire device. Lastly, two optical indicators 39, 40 (for example, of the liquid crystal type) indirectly display the temperature and flow rate of the water discharged from the duct 21, respectively, as will be illustrated further on.

The airtight connections between the various elements of the unit 10 are made according to the known technique and, although they have been schematically shown in order to complete the drawings, they will not therefore be further described herein.

The outlet 21 of the device is connected for example to the water tap of a washbasin, bath tub, or other sanitary fitting and with the control panel 38 close to it.

The regulating unit described above operates in the following way.

The diaphragm 23 has both faces subjected to the pressures of the incoming flows of water from the pipes 13 and 14. In particular, if the pressure difference between the faces is nil, the diaphragm is in the flat disposition shown in figure 2 and the sliding plug member 24 consequently keeps the apertures determined by its sliding ends and by the corresponding holes 28 and 29 open by the same degree.

If the pressure diference differs from zero (for example, because other users connected to the two water supply systems feeding the device draw off non-symmetrical quantities of water from them), then the corresponding flexure of the diaphragm in the direction of the lower pressure shifts the plug member 24 which narrows the apertures on the higher pressure side and widens the apertures on the lower pressure side.

From the outlets of the compensator the two flows of water reach the mixer and are mixed together in the proportions established by the angular position of the control pin of the mixer, which in practice determines the temperature of the mixed water flowing from the duct 21, the flow rate of which is determined by the device 35.

In the inoperative position, the device 35 is competely closed. When the "start/stop" pushbutton is pressed the control system is activated and it is thus possible to manually regulate the flow rate and the temperature of the water flowing from the duct 21 by pressing the corresponding pairs of pushbuttons "+" and "-" for controlling the motors. There are two indicators on the panel, controlled by the monitoring device: the first shows the temperature of the water (for example, by digital display) determined by the position of the motor 33 and, therefore, by the mixing ratio and the second shows the flow rate (for example, displayed analogically by a bar of variable length or thickness) determined by the position of the motor 36.

When the "start/stop" pushbutton is re-pressed the motor 36 is operated until the device 21 is completely closed and the conditions set by the "+" and "-" pushbuttons are memorized by the monitoring device 37 so that, when the "start/stop" pushbutton is pressed again, it signals the motors to reassume the aforesaid conditions.

With this operating cycle, the user may, for example memorize the flow rate and delivery temperature conditions that he considers the most suitable by means of the and "-" pushbuttons and subsequently press only the "start/stop" pushbutton in order to turn the water on or off.

The advantages of a compensator as described, which keeps the flow of water entering the mixer constant even in the presence of substantial pressure variations in the supply systems, are considerable.

In fact, it has been noted in particular that the temperature variations ofwater flowing from a mixer are mainly due, in the short term, to variations in pressure in the hot and cold water delivery pipes, and only in the long term to the effective variations in temperature of the latter.

This is essentially due to the fact that the temperatures of this water supplied by normal supply systems can be considered to be slightly variable within an expected range of values, while this is not so in the case of pressure ratios, which depend upon the momentary demands of the users of the distribution system, and whose sometimes even very rapid variations, unless controlled, lead to wide variations in the mixing ratio and in the final analysis to rapid variations, even of considerable extent, in the delivery temperature of the mixed water.

For that reason a regulating device carried out according to the innovatory principles herein claimed, supplies a very accurate temperature control stabilizing in the short term the mixing ratio by the compensator 11, and regulating in the long term said ratio by the well known thermostatic characteristic of the mixer which, due to its inertia in responding, is ineffectual in controlling the rapid temperature changes while it is fit for the slow changes.

The foregoing description of a regulating device applying the innovatory principles claimed herein is obviously given merely by way of example in order to illustrate such principles and should not therefore be understood as a limitation to the sphere of the invention claimed herein. For example, the operating cycle, as well as the control panel can be modified to adapt to particular requirements. Likewise, the shape of the regulator 12 and of the compensator 11 and their reciprocal spatial arrangement can be varied, for example to make them into a single unit.

Moreover, a single mixing unit can be used for several outlet taps even of different types of sanitary fittings, by providing on-off means of the known type (for example, solenoid valves) between said outlets and said unit, so as to be able to simultaneously regulate the temperature and, if necessary, the flow rate of the water flowing from all the connected taps.

Should it be considered unnecessary to regulate the slight variations in temperature of the water entering the device, the mixer 32 can be made without thermostatic characteristics. Conversely, these characteristics can be easily obtained electronically, by controlling the motor 33 with a signal which takes account of the operation of the "+" and "-" pushbuttons and also of the indication of a temperature sensor disposed on the route of the mixed water, as is easily imaginable by any expert technician.

## Claims

1. Device for mixing hot and cold water from two supply systems and dispensing water on command at a temperature established by the mixing ratio, characterized by the fact of comprising in combination: a mixing element connected to a first electric ratiomotor for varying the mixing ratio of the latter; a regulating element for controlling the flow of water from said mixer, operatively connected to a second electric ratiomotor; a compensator for correcting the difference in pressure in the two systems connected between said systems and said mixing element, said compensator acting, in proportion to such difference, on flow apertures between said systems and said mixer in order to reduce the area of flow from the system with a higher pressure and increase the area of flow from the system with a lower pressure.

2. Device as claimed in Claim 1, characterized by the fact that said compensator comprises a flexible diaphragm, both faces of which are subjected to the pressures of the two systems, and a plug member which slides, on deformation of the diaphragm, over connecting holes between said systems and said mixer in order to create said apertures.

3. Device as claimed in claim 1, characterized by the fact that said mixer is of the thermostatic type.

4. Device as claimed in Claim 3, characterized by the fact that said thermostatic mixer comprises a thermostatic mixing cartridge.

5. Device as claimed in Claim 1, characterized by the fact that said ratiomotors are made to rotate by a monitoring device connected to a pushbutton control panel.

6. Device as claimed in Claim 5, characterized by the fact that said control panel comprises a pair of pushbuttons for increasing and decreasing the mixing ratio controlling said first ratiomotor, a pair of pushbuttons for increasing and decreasing the rate of flow from the mixer controlling said second ratiomotor, a pushbutton for alternately turning the water on and off.

7. Device as claimed in Claim 6, characterized by the fact that upon pressure of the "off" pushbutton the monitoring device memorizes the position of the motors and upon subsequent pressure of the "on" pushbutton said monitoring device automatically operates the motors at the aforesaid memorized positions.

8. Device as claimed in Claim 1, characterized by the fact of comprising an optical indicator displaying an indication proportional to the angular position of the first ratiomotor.

9. Device as claimed in Claim 1, characterized by the fact of comprising an optical indicator displaying an indication proportional to the angular position of the second ratiomotor.

Fig.1

Fig.2

Fig.3

## Fig.4